# EUROPÄISCHE PATENTSCHRIFT

(11) **EP 2 672 349 B1**
(45) Veröffentlichungstag und Bekanntmachung des Hinweises auf die Patenterteilung: **22.02.2017**
(21) Anmeldenummer: 13001717.1
(22) Anmeldetag: 04.04.2013
(51) Int. Cl.: G05B 19/05, G07C 3/08

(54) **Vorrichtung und Verfahren zum Analysieren von Industriemaschinen**
Apparatus and method for analysing industrial machinery
Dispositif et procédé d'analyse de machines industrielles

(30) Priorität: 08.06.2012 DE 102012011405
(43) Veröffentlichungstag der Anmeldung: 11.12.2013
(60) Teilanmeldung: 16158110.3
(73) Patentinhaber: ROBERT BOSCH GMBH, 70442 Stuttgart (DE)
(72) Erfinder: Toloczyki, Johannes, 97833 Frammersbach (DE)
(74) Vertreter: Thürer, Andreas

(56) Entgegenhaltungen:
- DE-A1-102008 020 508
- US-A1- 2007 245 086
- US-A1- 2011 029 101
- US-A1- 2012 078 670
- US-A1- 2012 084 431

## Beschreibung

Die vorliegende Erfindung betrifft ein Messgerät und ein Verfahren zur Vermessung von Industriemaschinen oder -anlagen.

### Stand der Technik

Gesetzliche und unternehmerische Anforderungen an die Effizienz und Umweltverträglichkeit von Industriemaschinen oder -anlagen haben in der Vergangenheit zu einem erhöhten Bedarf an Maschinenanalysen geführt. Insbesondere werden Energieverbrauch und -effizienz ganzer Anlagen ebenso wie einzelner Maschinenteile geprüft und ausgewertet, um Energiesparhebel zu erkennen. Dazu können Prozesswerte wie elektrische Leistung, Druck oder Durchfluss einer Maschinenkomponente gemessen, visualisiert und interpretiert werden. Basierend auf den Ergebnissen kann ein Anwender Maßnahmen ergreifen, beispielsweise Logik in einem Steuerungsprogramm generieren oder ändern. Die Druckschrift EP 1 640 826 B1 offenbart in diesem Zusammenhang eine visuelle Darstellung von Prozesswerten in der Automatisierungstechnik, aus der EP 1 865 421 A1 ist
ein System zur Erstellung dynamischer Webseiten bekannt. US 2007/0245086 A1 zeigt ein Messsystem mit einer Messeinheit, einer Vielzahl von Messmodulen und eine SPS-Einheit. DE 10 2008 020 508 A1 zeigt eine Vorrichtung zur Bestimmung von Prozeßgrößen unter Verwendung eines OPC-Servers.

Nach der Messung eines Prozesswertes kann der entsprechende Wert beispielsweise zu anderen zuvor oder danach gemessenen Daten in eine Tabelle, insbesondere in ein Kalkulationsprogramm eingetragen werden. Mit Hilfe von Computerprogrammen können die erfassten Werte miteinander in Beziehung gesetzt und evaluiert werden.

Für die Erfassung und Auswertung von Korrelationen zwischen den maschinenrelevanten physikalischen Größen sind jedoch verschiedene manuelle Schritte erforderlich. So muss jedes Messgerät separat angesteuert werden, und die einzelnen gemessenen Werte müssen zusammengetragen und einem Computerprogramm zur Auswertung zugänglich gemacht werden.

Die vorliegende Erfindung hat die Aufgabe, die Möglichkeiten für eine automatische Analysierbarkeit von Maschinen und Maschinenanlagen im Hinblick auf zeitliche und/oder hierarchische Korrelationen von Maschinenelementen zu verbessern.

### Offenbarung der Erfindung

Erfindungsgemäß werden ein Messgerät und ein Verfahren mit den Merkmalen der unabhängigen Patentansprüche vorgeschlagen. Vorteilhafte Ausgestaltungen sind Gegenstand der Unteransprüche sowie der nachfolgenden Beschreibung.

Das erfindungsgemäße Messgerät zur Vermessung von Industriemaschinen oder -anlagen umfasst wenigstens ein Messmodul zum Messen mindestens einer ersten physikalischen Größe und wenigstens einen analogen Eingang zum Aufnehmen von Daten, insbesondere von Daten, die als Messwerte von einem externen Sensor erfasst wurden. Vorzugsweise ist das Messgerät dazu eingerichtet, gleichzeitig mit dem wenigstens einen Messmodul zu messen und Daten über den wenigstens einen analogen Eingang aufzunehmen.

Das erfindungsgemäße Messgerät weist weiterhin mindestens eine speicherprogrammierbare Steuerung (SPS) auf, die eingerichtet ist, vom mindestens einen Messmodul gemessene Daten und gleichzeitig über den mindestens einen Eingang aufgenommene Daten zu sammeln. Diese speicherprogrammierbare Steuerung wird im Folgenden zur besseren Unterscheidbarkeit von ggf. anzuschließenden weiteren ("externen") Maschinensteuerungen auch als "interne" SPS bezeichnet.

Das wenigstens eine Messmodul kann beispielsweise ein Leistungsmesser zum Messen einer elektrischen Leistung einer Maschinenkomponente sein. Jedes Messmodul weist vorzugsweise jeweils mindestens einen Anschluss (der beispielsweise ein Stromeingang oder - ausgang sein kann) für eine Verbindung mit einer Maschinen- oder Anlagenkomponente auf.

Das erfindungsgemäße Messgerät bietet den Vorteil, dass mehrere physikalische Größen (beispielsweise elektrische Verbräuche) parallel erfasst und die zugehörigen Daten als gemessene und als aufgenommene Daten über ein Feldbuskommunikationssystem übertragen werden können. Dadurch wird eine Voraussetzung für eine automatische Verknüpfung der Daten geschaffen. Nach Übertragung der Daten auf eine übergeordnete Recheneinheit (z.B. ein PC) können durch die Recheneinheit Analysealgorithmen angewandt werden. So kann das Erkennen von Korrelationen zwischen physikalischen Größen automatisiert und gegebenenfalls Maßnahmen zum Verbessern beispielsweise von Energiesparhebeln ergriffen werden. Insbesondere kann ein Verbessern der Energieeffizienz der Maschine oder Anlage erleichtert werden.

Das erfindungsgemäße Verfahren zum Vermessen und Analysieren von Maschinen oder Anlagen umfasst ein gleichzeitiges Messen von zwei oder mehr physikalischen Größen einer Maschine oder Anlage, wie z.B. einer elektrischen Leistung, eines Energieverbrauchs, eines Volumenstroms oder eines Drucks. Insbesondere eignet sich für das Messen das erfindungsgemäße Messgerät in seinen möglichen Ausführungsformen. Das Verfahren umfasst weiter ein Übertragen der Daten auf eine SPS, die die Daten sammelt. Ein Softwareprogramm, das beispielsweise von einer über ein Kommunikationssystem mit der SPS verbundenen Recheneinheit ausgeführt werden kann, greift auf die aufgezeichneten Daten zu und analysiert sie.

Das erfindungsgemäße Verfahren erlaubt ein automatisiertes Analysieren von Daten, die aus dem Messen von mindestens zwei physikalischen Größen resultieren. Ein Softwareprogramm kann somit automatisch die Daten miteinander verknüpfen und beispielsweise visualisieren und/oder Korrelationen erfassen. Dadurch wird ein schnelles und effizientes Sammeln und Aufbereiten der Messdaten möglich.

Vorzugsweise ist die SPS des Messgeräts auf ein vorbestimmtes Analyseprogramm abgestimmt, indem sie eingerichtet ist, Datenformate der Sensorebene zu speichern und so zu konvertieren, dass das Analyseprogramm auf einer geeigneten Recheneinheit die Daten interpretieren kann. Für diese Abstimmung eignet sich beispielsweise ein geeignetes SPS/NC-Programm.

Eine bevorzugte Ausführungsform des erfindungsgemäßen Messgeräts umfasst einen oder mehrere externe(n) Sensor(en), der bzw. die über den oder über mindestens einen der analogen Eingänge angeschlossen ist (sind). Jeder Sensor kann seinerseits ein Messmodul für eine physikalische Größe sein, beispielsweise für eine Größe, die eine hydraulische Kraft- oder Energieübertragung kennzeichnet. Messwerte des Sensors können über den jeweiligen analogen Eingang als Daten in das Messgerät eingespeist werden.

Vorzugsweise umfasst das Messgerät einen USB-Anschluss, über den insbesondere eine Recheneinheit angeschlossen werden kann, die ein geeignetes Analyseprogramm ausführen kann. Alternativ oder zusätzlich kann das Messgerät einen oder mehrere Anschlüsse für einen Feldbus umfassen, über den oder die eine Recheneinheit und/oder eine weitere (externe) Maschinensteuerung angeschlossen werden kann, und/oder über den/die ein oder mehrere weitere Messgeräte parallel geschaltet werden kann/können, beispielsweise mittels Ethernet; die letztere Möglichkeit erlaubt es, das Messgerät modular einzusetzen, also ggf. durch Kombination mehrerer erfindungsgemäßer Messgeräte eine Messanlage variabler Größe abhängig von der Anzahl zu messender physikalischer Größen und/oder der Anzahl untersuchter Maschinenkomponenten aufzubauen.

Der oder die Anschlüsse für einen Feldbus können beispielsweise einem Feldbus-Standard gemäß IEC 61158 entsprechen, z.B. SERCOS III. Jeder Anschluss ermöglicht vorzugsweise, Daten von angeschlossenen Aktoren und/oder Sensoren und/oder von einem oder mehreren angeschlossenen externen Maschinensteuerung(en) zum Betrieb von Industriemaschinen (wie Werkzeugmaschinen, Transportsystemen, Druckmaschinen, Maschinen der Automatisierungstechnik usw.) in die (interne) SPS im Messgerät einzulesen.

Vorzugsweise umfasst die interne SPS einen OPC-Server (OPC: OLE for Process Control), der eine Kommunikation der internen SPS mit einer oder mehreren an das Messgerät ange- schlossenen externen Geräten (beispielsweise einer externen SPS, einer Recheneinheit oder eines weiteren Messgeräts) ermöglicht. Der OPC-Server liegt dabei vorzugsweise als Software vor, die von der SPS ausgeführt wird.

Wenn eine (externe) Maschinensteuerung über einen Feldbus an das Messgerät angeschlossen ist, kann der OPC-Server beispielsweise Variablen der Maschinensteuerung (z.B. einer Ventilansteuerung) abfragen. Analog umfasst das erfindungsgemäße Verfahren in einer vorteilhaften Ausführungsform einen Schritt des Umwandeins der Daten zur Übertragung in dem Bussystem.

Das erfindungsgemäße Messgerät ist vorzugsweise Teil eines Analysesystems zum Vermessen und Analysieren von Maschinen oder Anlagen eingebunden, das zudem eine Recheneinheit wie beispielsweise einen Computer umfasst, wobei die Recheneinheit eingerichtet ist, mit der (internen) SPS des Messgeräts zu kommunizieren. Vorzugsweise ist die Recheneinheit dabei eingerichtet, auf die von dem (den) Messmodul(en) gemessenen Daten und die über den mindestens einen analogen Eingang aufgenommenen Daten (also auf die von der SPS gesammelten Daten) zuzugreifen und sie zu analysieren. Die Recheneinheit des Analysesystems kann mit dem Messgerät beispielsweise über einen USB-Anschluss des Messgeräts oder über einen Anschluss für einen Feldbus verbunden sein. Für die Kommunikation der Recheneinheit mit der internen SPS (die drahtlos oder drahtgebunden erfolgen kann) können beispielsweise die Spezifikationen von Profibus, Ethernet oder Sercoslll zugrundegelegt sein.

Die Recheneinheit führt vorzugsweise ein Softwareprogramm aus, das auf die von der Steuerung aufgezeichneten Analysedaten zugreifen und sie mit Hilfe von Auswertealgorithmen analysieren kann. So können aus ausgewählten oder allen Messwerten der Messmodule und/oder externen Sensor(en) Korrelationen erkannt und/oder ein Energiefluss oder mehrere Energieflüsse zwischen Komponenten ermittelt werden. Ein geeignetes Softwareprogramm ist beispielsweise die Software IndraMotion MTX EWB, die über ein speziell angepasstes SPS/NC Programm auf die Daten zugreifen kann.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Zeichnungen schematisch dargestellt und wird im Folgenden unter Bezugnahme auf die Zeichnung ausführlich beschrieben.

Figurenbeschreibung
- Figur 1: zeigt eine beispielshafte Ausführungsform eines erfindungsgemäßen Messgeräts.
- Figur 2: stellt eine Ausführungsform eines erfindungsgemäßen Analysesystems dar.
- Figur 3: zeigt beispielhaft Schritte des erfindungsgemäßen Verfahrens.

### Detaillierte Beschreibung der Zeichnung

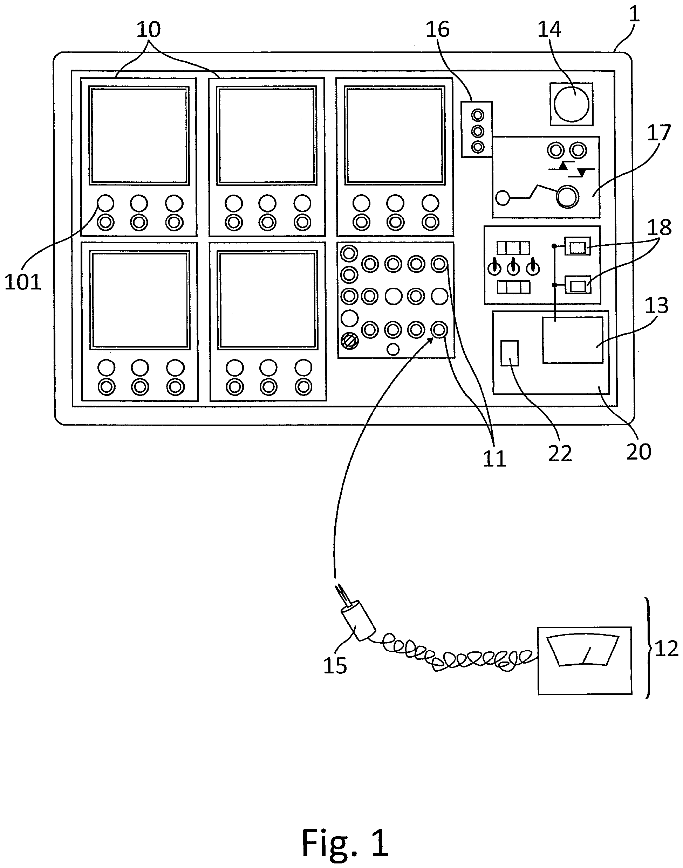

Das in Figur 1 gezeigte Messgerät 1 umfasst fünf Messmodule 10, die jeweils dreiphasige Leistungsmesser sind und jeweils über drei Stromeingänge 101 verfügen. Das Messgerät umfasst weiterhin Anschlüsse 11, über die jeweils ein externer Sensor angeschlossen werden kann. In der Figur 1 gezeigt ist beispielhaft ein Sensor 12, dessen Stecker 15 in einen Anschluss 11 gesteckt werden kann. Weiterhin weist das dargestellte Messgerät 1 eine speicherprogrammierbare Steuerung 20 auf, die einen OPC-Server 13 umfasst und in der Daten 22 gesammelt sind, die von einem oder mehreren Messmodulen 10 gemessen und über den mindestens einen Eingang 11 aufgenommen wurden.

Weiterhin umfasst das gezeigte Messgerät Anschlüsse 18 für einen Feldbus, wie z.B. SERCOS III oder Profibus. Wenn über diesen Anschluss 18 eine Verbindung zu einem externen Gerät (z.B. einer externen Maschinensteuerung, einem parallelgeschalteten weiteren Messgerät und/oder einer angeschlossenen Recheneinheit) hergestellt wurde, kann der OPC-Server 13 mit diesem Gerät kommunizieren, beispielsweise Parameter oder Variablen der Steuerung abfragen.

Eine Recheneinheit mit geeigneter Anaylsesoftware kann über einen USB-Anschluss 14 und/oder über einen Anschluss 18 an das Messgerät angeschlossen werden.

Schließlich umfasst das Messgerät 1 der Figur 1 eine Anzeige 16 für Betriebszustände und Trigger 17, mit denen ein Verwender das Messgerät starten oder stoppen kann. Ist an das Messgerät eine Recheneinheit mit einer geeigneten Analysesoftware angeschlossen, erfolgt die Bedienung des Messgeräts vorzugsweise über diese Software.

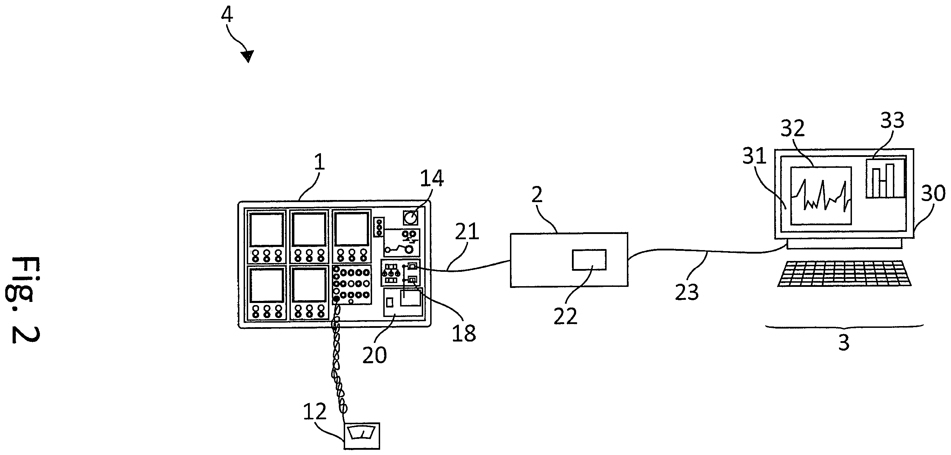

Figur 2 zeigt, wie das Messgerät 1 geeignet in ein Analysesystem 4 eingebettet werden kann: Das Messgerät ist dabei über den Feldbus 21 mit einer externen Maschinensteuerung 2 verbunden. Die Maschinensteuerung 2 ist dazu eingerichtet, auf Daten 22 des Messgeräts 1 zuzugreifen und diese aufzuzeichnen. Die Maschinensteuerung 2 ist über ein Kabel 23 mit einer Recheneinheit 3 verbunden und kommuniziert mit dieser vorzugsweise über Ethernet.

Der Anschluss der externen Maschinensteuerung 2 ist optional; alternativ kann die Recheneinheit auch direkt über einen der Anschlüsse 18 oder über den USB-Anschluss 14 an das Messgerät 1 angeschlossen werden.

Die gezeigte Recheneinheit 3 führt ein Softwareprogramm 31 aus, das auf die von der internen SPS 20 aufgezeichneten Daten 22 zugreift, die von den Leistungsmessern 10 und den Eingängen 11 geliefert werden. Darüber hinaus kann das Softwareprogramm auf die Daten 22 der externen Maschinensteuerung zugreifen.

Insbesondere kann die Auswertung dieser Daten ein Ermitteln von Energieflüssen, Energieverbräuchen und/ oder Datenkorrelationen umfassen. Die gezeigte Recheneinheit visualisiert erfasste Analysedaten und/oder aus diesen ermittelte Werte auf einem Bildschirm 30 in einem Oszillogramm 32 und einem Säulendiagramm 33. Diese Visualisierungen können es einem Betrachter ermöglichen, verbesserungsfähige Abläufe oder Zusammenhänge zu erkennen und geeignete Maßnahmen zu ergreifen.

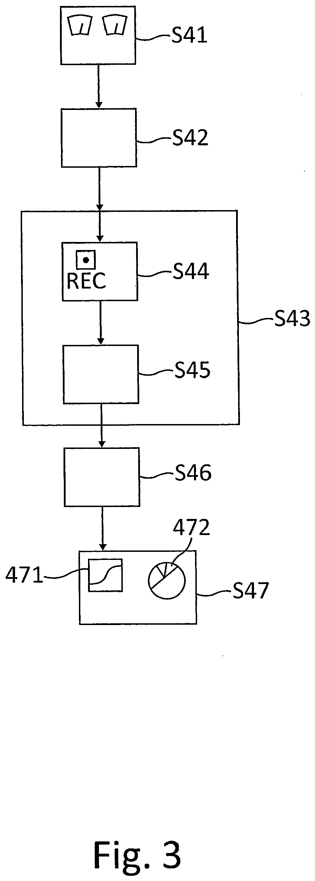

Figur 3 zeigt schematisch eine Abfolge von Verfahrensschritten entsprechend einer Ausführungsform der vorliegenden Erfindung. In einem Schritt S41 werden dabei zwei oder mehr physikalische Größen einer Maschine oder Anlage gemessen. Die durch die Messungen gelieferten Werte werden in einem Schritt S42 auf eine speicherprogrammierbare Steuerung 20 übertragen. Die speicherprogrammierbare Steuerung sammelt die Daten in einem Schritt S43, der einen Schritt S44 des Speicherns der Daten und einen Schritt S45 des Konvertierens zugehöriger Formate der Daten in für das Softwareprogramm interpretierbare Datenformate umfasst.

Ein Softwareprogramm, das vorzugsweise auf einer mit der integrierten SPS 20 über Ethernet kommunizierenden Recheneinheit 3 ausgeführt wird, greift in einem Schritt S46 auf die Daten zu und analysiert sie, beispielsweise um Energieverteilungen und/oder Wirkungsgrade von Aggregaten der Maschine oder Anlage zu erkennen. In einem Schritt S47 visualisiert das Softwareprogramm Analysedaten und/oder Ergebnisse der Analyse mit Funktionsgraphen 471 und einem Kreisdiagramm 472 auf einem Bildschirm oder Display. Dadurch wird einem Anwender die Möglichkeit gegeben, Zusammenhänge zu erkennen und geeignete Maßnahmen zu ergreifen.

## Patentansprüche

1. Messgerät (1) zur Vermessung von Industriemaschinen oder -anlagen, das umfasst:
mindestens ein Messmodul (10), das dazu eingerichtet ist, mindestens eine erste physikalische Größe, insbesondere eine elektrische Leistung, zu messen,
mindestens einen analogen Eingang (11), der dazu eingerichtet ist, Daten aufzunehmen; und
eine speicherprogrammierbare Steuerung (20), die eingerichtet ist, vom mindestens einen Messmodul (10) gemessene Daten und gleichzeitig über den mindestens einen analogen Eingang (11) aufgenommene Daten zu sammeln,
wobei die speicherprogrammierbare Steuerung (20) einen OPC-Server (13) umfasst, der eine Kommunikation der speicherprogrammierbaren Steuerung (20) mit einer oder mehreren an das Messgerät (1) angeschlossenen externen Geräten ermöglicht,
wobei der OPC-Server (13) als Software vorliegt, die von der speicherprogrammierbaren Steuerung (20) ausgeführt wird.

2. Messgerät gemäß Anspruch 1, das mindestens einen Sensor (12) zum Messen mindestens einer zweiten physikalischen Größe umfasst, wobei der mindestens eine Sensor (12) am mindestens einen analogen Eingang (11) angeschlossen ist und wobei die aufgenommenen Daten Messwerte sind, die vom mindestens einen Sensor erfasst wurden.

3. Messgerät gemäß Anspruch 1 oder 2, wobei mindestens eine der ersten und/oder der zweiten physikalischen Größen eine elektrische Leistung, ein Energieverbrauch, ein Volumenstrom, ein Druck, ein Strom und/oder eine Spannung einer Maschinenkomponente ist.

4. Messgerät gemäß einem der Ansprüche 1 bis 3, das mindestens einen Anschluss (18) für einen Feldbus (21) umfasst, über den eine externe Maschinensteuerung (2) angeschlossen oder über den ein weiteres Messgerät gemäß einem der Ansprüche 1 bis 3 parallel geschaltet werden kann.

5. Messgerät gemäß Anspruch 4, wobei der OPC-Server (13) eine Kommunikation der speicherprogrammierbaren Steuerung (20) mit einer über den mindestens einen Anschluss (18) angeschlossenen externen Maschinensteuerung (2) oder mit einem über den mindestens einen Anschluss (18) parallel geschalteten weiteren Messgerät ermöglicht.

6. Messgerät gemäß einem der Ansprüche 1 bis 5, das zwei oder mehr Trigger-Funktionen (17) und /oder eine Anzeige (16) für Betriebszustände und/oder einen USB-Anschluss (14) aufweist.

7. Analysesystem (4) zum Vermessen und Analysieren von Industriemaschinen oder - anlagen, das umfasst:
ein Messgerät (1) gemäß einem der vorstehenden Ansprüche; und
eine Recheneinheit (3), die dazu eingerichtet ist, drahtlos oder drahtgebunden mit der speicherprogrammierbaren Steuerung (20) im Messgerät zu kommunizieren, beispielsweise um auf von der speicherprogrammierbaren Steuerung (20) aufgezeichnete gemessene und aufgenommene Daten (22) zuzugreifen und diese zu analysieren.

8. Analysesystem (4) gemäß Anspruch 7, das zudem eine über einen ersten Feldbus (21) angeschlossene externe Maschinensteuerung (2) umfasst, die dazu eingerichtet ist, die gemessenen Daten und die aufgenommenen Daten (22) aufzuzeichnen und/oder der Recheneinheit (3) einen Zugriff auf sie zu ermöglichen, wobei die Recheneinheit (3) vorzugsweise über einen USB- Eingang (14) oder über einen Anschluss (18) für einen Feldbus angeschlossen ist.

9. Analysesystem gemäß Anspruch 7 oder 8, wobei die Recheneinheit (3) dazu eingerichtet ist, die gemessenen und aufgenommenen Daten und/oder daraus ermittelte Werte durch ein oder mehrere Diagramme wie Funktionsgraphen, Oszillogramme, Säulendiagramme und/oder Kreisdiagramme zu visualisieren.

10. Verfahren zum Vermessen und Analysieren von Industriemaschinen oder -anlagen, das die folgenden Schritte umfasst:
gleichzeitiges Messen (S41) von zwei oder mehr physikalischen Größen einer Industriemaschine oder -anlage mittels eines Messgeräts (1) gemäß einem der Ansprüche 1 bis 6,
Übertragen (S42) der Daten (22) auf eine speicherprogrammierbare Steuerung (20),
Sammeln (S43) der Daten durch die speicherprogrammierbare Steuerung,
Zugreifen (S45), durch ein Softwareprogramm (31), auf die von der speicherprogrammierbaren Steuerung aufgezeichneten Daten, und
Analysieren (S46) der Daten durch das Softwareprogramm.

11. Verfahren gemäß Anspruch 10, wobei das Sammeln der Daten (22) ein Speichern (S44) der Daten und ein Konvertieren (S45) zugehöriger Formate der Daten (22) in für das Softwareprogramm interpretierbare Datenformate umfasst.

12. Verfahren gemäß Anspruch 10 oder 11, wobei mindestens eine der physikalischen Größen eine elektrische Leistung, ein Energieverbrauch, ein Volumenstrom, ein Druck, ein Strom und/oder eine Spannung einer Maschinenkomponente ist.

13. Verfahren gemäß einem der Ansprüche 10 bis 12, wobei das Analysieren (S46) der Daten durch ein Softwareprogramm (31) einen oder mehrere der folgenden Schritte umfasst:
Ermitteln eines Energieflusses oder mehrerer Energieflüsse zwischen zwei oder mehr Komponenten der Maschine oder Anlage;
Ermitteln eines Energieverbrauchs pro Komponente und/oder pro Zyklus;
Ermitteln von Korrelationen zwischen den Daten, insbesondere Ermitteln eines Nutzungsgrades aus aufgenommener und abgegebener Leistung einer Komponente;
Ermitteln von Energiekosten pro Werkstück, das mit der Maschine oder Anlage hergestellt wird oder wurde;
Ermitteln von einer CO2-Emission der Maschine.

14. Verfahren gemäß einem der Ansprüche 10 bis 13, das zudem umfasst: Visualisieren (S47) der Daten und/oder daraus ermittelter Werte auf einem Bildschirm oder Display (30) durch ein oder mehrere Diagramme wie Funktionsgraphen (471), Oszillogramme (32), Säulendiagramme (33) und/oder Kreisdiagramme (474).

## Claims

1. Measuring instrument (1) for surveying industrial machines or installations that comprises:
at least one measurement module (10) that is set up to measure at least one first physical variable, particularly an electrical power,
at least one analogue input (11) that is set up to pick up data; and
a programmable logic controller (20) that is set up to collect data measured by the at least one measurement module (10) and, at the same time, data picked up via the at least one analogue input (11),
wherein the programmable logic controller (20) comprises an OPC server (13) that allows the programmable logic controller (20) to communicate with one or more external devices connected to the measuring instrument (1),
wherein the OPC server (13) is present as software that is executed by the programmable logic controller (20).

2. Measuring instrument according to Claim 1 that comprises at least one sensor (12) for measuring at least one second physical variable, wherein the at least one sensor (12) is connected to the at least one analogue input (11) and wherein the data picked up are measured values that have been captured by the at least one sensor.

3. Measuring instrument according to Claim 1 or 2, wherein at least one of the first and/or the second physical variables is an electrical power, an energy consumption, a volume flow, a pressure, a current and/or a voltage of a machine component.

4. Measuring instrument according to one of Claims 1 to 3 that comprises at least one port (18) for a field bus (21) via which an external machine controller (2) can be connected or via which a further measuring instrument according to one of Claims 1 to 3 can be connected in parallel.

5. Measuring instrument according to Claim 4, wherein the OPC server (13) allows the programmable logic controller (20) to communicate with an external machine controller (2) connected via the at least one port (18) or with a further measuring instrument connected in parallel via the at least one port (18).

6. Measuring instrument according to one of Claims 1 to 5 that has two or more trigger functions (17) and/or a display (16) for operating states and/or a USB port (14).

7. Analysis system (4) for surveying and analysing industrial machines or installations that comprises:
a measuring instrument (1) according to one of the preceding claims; and
a computation unit (3) that is set up to communicate wirelessly or by wire with the programmable logic controller (20) in the measuring instrument, for example in order to access measured and picked-up data (22) recorded by the programmable logic controller (20) and to analyse said data.

8. Analysis system (4) according to Claim 7 that additionally comprises an external machine controller (2) connected via a first field bus (21), said machine controller being set up to record the measured data and the picked-up data (22) and/or to allow the computation unit (3) to access said data, wherein the computation unit (3) is preferably connected via a USB input (14) or via a port (18) for a field bus.

9. Analysis system according to Claim 7 or 8, wherein the computation unit (3) is set up to visualise the measured and picked-up data and/or values ascertained therefrom by means of one or more graphs such as function graphs, oscillograms, bar charts and/or pie charts.

10. Method for surveying and analysing industrial machines or installations that comprises the following steps:
measurement (S41) of two or more physical variables of an industrial machine or installation by means of a measuring instrument (1) according to one of Claims 1 to 6 at the same time,
transmission (S42) of the data (22) to a programmable logic controller (20),
collection (S43) of the data by the programmable logic controller,
access (S45), by a software program (31), to the data recorded by the programmable logic controller, and
analysis (S46) of the data by the software program.

11. Method according to Claim 10, wherein the collection of the data (22) comprises the data being stored (S44) and associated formats of the data (22) being converted (S45) into data formats that are interpretable by the software program.

12. Method according to Claim 10 or 11, wherein at least one of the physical variables is an electrical power, an energy consumption, a volume flow, a pressure, a current and/or a voltage of a machine component.

13. Method according to one of Claims 10 to 12, wherein the analysis (S46) of the data via a software program (31) comprises one or more of the following steps:
ascertainment of a flow of energy or of multiple flows of energy between two or more components of the machine or installation;
ascertainment of an energy consumption per component and/or per cycle;
ascertainment of correlations between the data, particularly ascertainment of a utilisation factor from drawn and delivered power of a component;
ascertainment of energy costs per workpiece that is or has been produced using the machine or installation;
ascertainment of a CO2 emission from the machine.

14. Method according to one of Claims 10 to 13 that additionally comprises:
visualisation (S47) of the data and/or values ascertained therefrom on a screen or display (30) by one or more graphs such as function graphs (471), oscillograms (32), bar charts (33) and/or pie charts (474).

## Revendications

1. Appareil de mesure (1) destiné à mesurer des machines ou des installations industrielles, comprenant :
au moins module de mesure (10) qui est conçu pour mesurer au moins une première grandeur physique, en particulier une puissance électrique,
au moins une entrée analogique (11) qui est conçue pour acquérir des données ; et
une unité de commande programmable en mémoire (20) qui est conçue pour recueillir des données mesurées par au moins un module de mesure (10) en même temps que des données acquises par l'intermédiaire de l'au moins une entrée analogique (11),
dans lequel l'unité de commande programmable en mémoire (20) comprend un serveur OPC (13) qui permet une communication entre l'unité de commande programmable en mémoire (20) et un ou plusieurs appareils externes connectés à l'appareil de mesure (1),
dans lequel le serveur OPC (13) se présente sous la forme d'un logiciel qui est exécuté par l'unité de commande programmable en mémoire (20).

2. Appareil de mesure selon la revendication 1, comprenant au moins un capteur (12) destiné à mesurer au moins une seconde grandeur physique, dans lequel ledit au moins un capteur (12) est connecté à au moins une entrée analogique (11) et dans lequel les données acquises sont des valeurs de mesure qui ont été détectées par au moins un capteur.

3. Appareil de mesure selon la revendication 1 ou 2, dans lequel au moins l'une de la première et/ou de la seconde grandeur physique est une puissance électrique, une consommation d'énergie, un débit volumique, une pression, un courant et/ou une tension d'un composant de machine.

4. Appareil de mesure selon l'une quelconque des revendications 1 à 3, comprenant au moins un connecteur (18) destinée à un bus de terrain (21), par l'intermédiaire duquel une unité de commande de machine externe (2) peut être connectée en parallèle ou par l'intermédiaire duquel un autre appareil de mesure selon l'une quelconque des revendications 1 à 3 peut être connecté en parallèle.

5. Appareil de mesure selon la revendication 4, dans lequel le serveur OPC (13) permet une communication entre l'unité de commande programmable en mémoire (20) et une unité de commande de machine externe (2) connectée par l'intermédiaire dudit au moins un connecteur (18) ou un autre appareil de mesure connecté en parallèle par l'intermédiaire dudit au moins un connecteur (18).

6. Appareil de mesure selon l'une quelconque des revendications 1 à 5, présentant deux fonctions de déclenchement (17) ou plus et/ou un afficheur (16) affichant des états de fonctionnement et/ou un connecteur USB (14).

7. Système d'analyse (4) destiné à mesurer et à analyser des machines ou des installations industrielles, comprenant :
un appareil de mesure (1) selon l'une quelconque des revendications précédentes ; et
une unité de calcul (3), qui est conçue pour communiquer sans fil ou par liaison filaire avec l'unité de commande programmable en mémoire (20) de l'appareil de mesure, par exemple pour accéder à des données (22) enregistrées, mesurées et acquises par l'unité de commande programmable en mémoire (20) et pour les analyser.

8. Système d'analyse (4) selon la revendication 7, comprenant en outre une unité de commande de machine externe (2) connectée par l'intermédiaire d'un premier bus de terrain (21), qui est conçue pour enregistrer les données mesurées et les données acquises (22) et/ou permettre à l'unité de calcul (3) d'accéder à celles-ci, dans lequel l'unité de calcul (3) est de préférence connectée par l'intermédiaire d'une entrée USB (14) ou par l'intermédiaire d'un connecteur (18) destiné à un bus de terrain.

9. Système d'analyse selon la revendication 7 ou 8, dans lequel l'unité de calcul (3) est conçue pour visualiser les données mesurées ou acquises et/ou les valeurs déterminées à partir de celles-ci par l'intermédiaire d'un ou plusieurs diagrammes tels que des graphes fonctionnels, des oscillogrammes, des diagrammes à colonnes et/ou des diagrammes circulaires.

10. Procédé pour l'amélioration et l'analyse de machines ou d'installations industrielles, comprenant les étapes consistant à :
mesurer simultanément (S41) deux grandeurs physiques ou plus d'une machine ou d'une installation industrielle au moyen d'un appareil de mesure (1) selon l'une quelconque des revendications 1 à 6,
transmettre (S42) les données (22) à une unité de commande programmable en mémoire (20),
recueillir (S43) les données par l'intermédiaire de l'unité de commande programmable en mémoire,
accéder (S45), par l'intermédiaire d'un programme logiciel (31), aux données enregistrées par l'unité de commande programmable en mémoire, et
analyser (S46) les données au moyen du programme logiciel.

11. Procédé selon la revendication 10, dans lequel le recueil des données (22) comprend un stockage (S44) des données et une conversion (S45) de formats des données (22) en des formats de données pouvant être interprétés par le programme logiciel.

12. Procédé selon la revendication 10 ou 11, dans lequel au moins l'une des grandeurs physiques est une puissance électrique, une consommation d'énergie, un débit volumique, une pression, un courant et/ou une tension d'un composant de machine.

13. Procédé selon l'une quelconque des revendications 10 à 12, dans lequel l'analyse (S46) des données par l'intermédiaire d'un programme logiciel (31) comprend une ou plusieurs des étapes suivantes :
déterminer un flux d'énergie ou plusieurs flux d'énergie entre deux composants de la machine ou de l'installation ou plus ;
déterminer une consommation d'énergie pour chaque composant et/ou chaque cycle ;
déterminer des corrélations entre les données, en particulier, déterminer un taux d'utilisation à partir d'une puissance acquise et délivrée d'un composant ;
déterminer des coûts en énergie pour chaque pièce à usiner qui est ou a été fabriquée au moyen de la machine ou de l'installation ;
déterminer une émission de CO2 de la machine.

14. Procédé selon l'une quelconque des revendications 10 à 13, consistant en outre à :
visualiser (S47) les données et/ou des valeurs déterminées à partir de celles-ci sur un écran ou un afficheur (30) par l'intermédiaire d'un ou plusieurs diagrammes tels que des graphes fonctionnels (471), des oscillogrammes (32), des diagrammes en colonnes (33) et/ou des diagrammes circulaires (474).
